# FASCICULE DE BREVET EUROPEEN

(11) **EP 0 876 248 B1**
(45) Date de publication et mention de la délivrance du brevet: **01.08.2001**
(21) Numéro de dépôt: 97901144.2
(22) Date de dépôt: 22.01.1997
(51) Int. Cl.: B29C 45/44, B65D 41/34

(54) **MOULE POUR FORMER DES BOUCHONS A LANGUETTES RETOURNEES AINSI QUE BOUCHON FORME DANS UN TEL MOULE**
FORM ZUR HERSTELLUNG VON VERSCHLUSSKAPPEN MIT UMGEBOGENEN LASCHEN SOWIE EINE IN EINER SOLCHEN FORM HERGESTELLTE VERSCHLUSSKAPPE
MOULD FOR PRODUCING BOTTLE CAPS WITH TUCKED-IN TABS, AND RESULTING CAP

(30) Priorité: 26.01.1996 FR 9601189
(43) Date de publication de la demande: 11.11.1998
(60) Demande divisionnaire: 98103126.3
(73) Titulaire: ASTRA PLASTIQUE, 69830 Saint Georges de Reneins (FR)
(72) Inventeur: CHAMPAGNON, Pascal, F-69220 Saint-Jean-D'Ardières (FR); BENOIT-GONIN, Claude, F-69460 Odenas (FR)
(74) Mandataire: Maureau, Philippe
(86) Numéro de dépôt international: FR9700126
(87) Numéro de publication internationale: WO9727037

(56) Documents cités:
- EP-A- 0 125 097
- WO-A-94/18085
- US-A- 4 529 096
- US-A- 4 697 714
- US-A- 5 281 385

## Description

La présente invention a pour objet un moule pour la réalisation de bouchons inviolables à languettes retournées dans le moule, ainsi qu'un bouchon formé dans un tel moule.

Une solution pour rendre inviolable un bouchon à vis comportant un fond et une jupe filetée est de munir la jupe filetée, sur son bord libre opposé au fond du bouchon, d'une bague d'inviolabilité. Cette dernière comporte des languettes retournées vers le fond du bouchon et coopérant avec une nervure annulaire réalisée sur une bouteille destinée à recevoir le bouchon. La bague d'inviolabilité est reliée à la jupe par des pontets ruptibles. Ainsi, lors de la première ouverture de la bouteille, lorsque le bouchon est dévissé pour la première fois, les languettes viennent en butée contre la nervure annulaire de la bouteille, empêchant ainsi de suivre le bouchon dans son mouvement de translation. Les pontets ruptibles sont alors rompus. Cette rupture irréversible permet de visualiser que la bouteille a déjà été ouverte au moins une fois.

Le brevet français FR-2 525 565 décrit un bouchon de ce type.

Pour réaliser un tel bouchon, il est connu d'utiliser un moule en trois parties : une partie mobile ou fond de moule épousant la forme extérieure du bouchon sans la bague d'inviolabilité, une partie dévêtisseuse ou bague dévêtrice épousant la forme extérieure de la bague d'inviolabilité et un noyau de moule fixe épousant la forme intérieur du bouchon et de la bague d'inviolabilité.

Avec un tel moule, il est possible de retirer le bouchon du moule sans dévissage, en éloignant la partie mobile et la bague dévêtrice du noyau fixe par translation. Lors du démoulage, les languettes sont entraînées dans une position radiale, orientée vers l'intérieur de la bague d'inviolabilité. Cette position est indésirable. Les languettes sont alors retournées de telle sorte qu'elles soient presque parallèles à la jupe et à la bague d'inviolabilité et orientées vers le fond du bouchon. Pour mettre les languettes dans la position voulue, la bague d'inviolabilité, et le bouchon qui lui est solidaire, sont rapprochés du noyau, de telle sorte que les languettes soient repliées vers l'intérieur du bouchon par le noyau du moule.

Lors de cette opération de repliage des languettes, l'ensemble formé par le bouchon et la bague d'inviolabilité n'est maintenu que par la bague dévêtrice, au niveau de la bague d'inviolabilité. En effet, la partie du moule doit être retirée au début de l'opération de démoulage pour permettre la déformation du bouchon lorsqu'il est retiré en translation du noyau. Il arrive parfois que le bouchon s'incline, au cours de l'opération de repliage, empêchant ainsi un repliage de toutes les languettes. Cette inclinaison est favorisée par un léger jeu qui se forme entre la bague dévêtrice et la bague d'inviolabilité au cours du démoulage. Ce jeu est dû à la contraction du matériau constitutif de la bague d'inviolabilité suite à son refroidissement.

Le but de l'invention est alors d'empêcher que l'ensemble formé par le bouchon et la bague d'inviolabilité ne s'incline au cours de l'opération de repliage des languettes. Il s'agit donc de procurer un meilleur maintien de cet ensemble dans la bague dévêtrice.

A cet effet, l'invention propose un moule et un bouchon destiné à être réalisé dans ce moule.

Le moule selon l'invention est du type moule pour former un bouchon comportant une jupe cylindrique munie d'au moins un filet de vissage et obturée à une extrémité par un fond ainsi qu'une bague d'inviolabilité reliée à l'extrémité libre de la jupe par des pontets ruptibles, la bague d'inviolabilité comportant des languettes destinées à coopérer avec une nervure annulaire située sur le col d'un récipient destiné à recevoir le bouchon, présentant une partie mobile ou fond de moule dont la paroi intérieure correspond à la surface extérieure de la jupe et du fond, une partie dévêtisseuse ou bague dévêtrice dont la surface interne correspond à la surface extérieure de la bague d'inviolabilité et un noyau destiné à être retiré par un mouvement de translation, sans rotation, et dont la surface extérieure correspond à la suface intérieure du fond, de la jupe et de la bague d'inviolabilité.

Selon l'invention, la bague dévêtrice présente du côté faisant face au fond du moule, au niveau du bord inférieur de la jupe et en au moins deux endroits distincts, au moins une encoche et/ou au moins une saillie afin de créer une liaison tenon/mortaise entre la jupe et la bague dévêtrice lors des moulage et démoulage du bouchon.

De cette façon, une parfaite stabilité du bouchon est assurée. En effet, lors du moulage, le matériau constitutif du bouchon vient épouser la forme du moule, notamment de la bague dévêtrice, et lorsque, suite au refroidissement, le matériau s'est légèrement rétracté, les liaisons tenon/mortaise subsistent et assurent un excellent maintien du bouchon.

Avantageusement, la bague dévêtrice comporte trois encoches ou trois saillies réparties à la périphérie d'un rebord sur lequel s'appuie le bord inférieur de la jupe en position fermée du moule. De cette manière, le bouchon est maintenu en trois point, garantissant une bonne stabilité sans risque de coincer le bouchon.

Lorsque le noyau du moule comporte trois rainures pour former trois filets dans la jupe du bouchon, chaque encoche ou saillie est placée entre les extrémités, situées du côté de la bague dévêtrice, de deux rainures voisines du noyau. De cette façon, lors du retrait du noyau hors du bouchon, les saillies ou encoches réalisées sur le bouchon sont soumises à une contrainte minimale.

De même, chaque encoche ou saillie est placée entre deux entailles voisines du moule prévues pour réaliser les pontets ruptibles reliant la bague d'inviolabilité à la jupe, afin de pouvoir démouler le bouchon sans risque de l'endommager .

Le bouchon selon l'invention est du type comportant une jupe cylindrique munie d'au moins un filet de vissage et obturée à une extrémité par un fond ainsi qu'une bague d'inviolabilité reliée à l'extrémité libre de la jupe par des pontets ruptibles, la bague d'inviolabilité comportant des languettes qui, retournées vers l'intérieur et vers le fond du bouchon, sont destinées à coopérer avec une nervure annulaire située sur le col d'un récipient destiné à recevoir le bouchon.

Selon l'invention, ce bouchon présente en outre, au niveau du bord inférieur de la jupe et en au moins deux endroits distincts, au moins une saillie et/ou au moins une encoche.

Avantageusement les saillies et/ou encoches sont disposées sur des zones correspondant au plus à 30% de la circonférence et de préférence à environ 10% de la circonférence du bouchon. De plus, la hauteur des saillies ou encoches est inférieure ou égale à 0,6 mm, et de préférence de l'ordre de 0,5 mm.

Il s'agit, en effet, de dimensionner les saillies ou encoches de façon à assurer un bon maintien du bouchon, sans toutefois réaliser un accrochage trop important sur la bague dévêtrice, ce qui serait le cas si les saillies ou encoches étaient de taille trop importante.

On retrouve là un bouchon pouvant être fabriqué dans un moule tel que défini ci-dessus.

De préférence, le bord inférieur de la jupe comporte trois saillies ou trois encoches réparties à sa périphérie.

Avantageusement, quand la jupe comporte sur sa face intérieure trois filets, chaque saillie ou encoche est placée entre les extrémités, situées du côté du bord libre de la jupe, de deux filets.

Par analogie avec les caractéristiques du moule, chaque saillie ou encoche est placée entre deux pontets ruptibles voisins.

De toute façon, l'invention sera bien comprise à l'aide de la description qui suit, en référence au dessin schématique annexé, représentant à titre d'exemple non limitatif deux formes d'exécution d'un moule selon l'invention, ainsi qu'un bouchon réalisé à l'aide de l'un ces moules.
Figures 1 à 3 représentent en coupe un moule selon l'invention au cours de différentes étapes du démoulage ;
Figure 4 est une vue du détail A de la figure 1 à échelle agrandie ;
Figure 5 est une vue du détail B de la figure 3 à échelle agrandie ;
Figures 6 et 7 correspondent aux figures 4 et 5 et montrent une variante d'exécution du moule ; et
Figure 8 représente en perspective à échelle agrandie un bouchon selon l'invention.

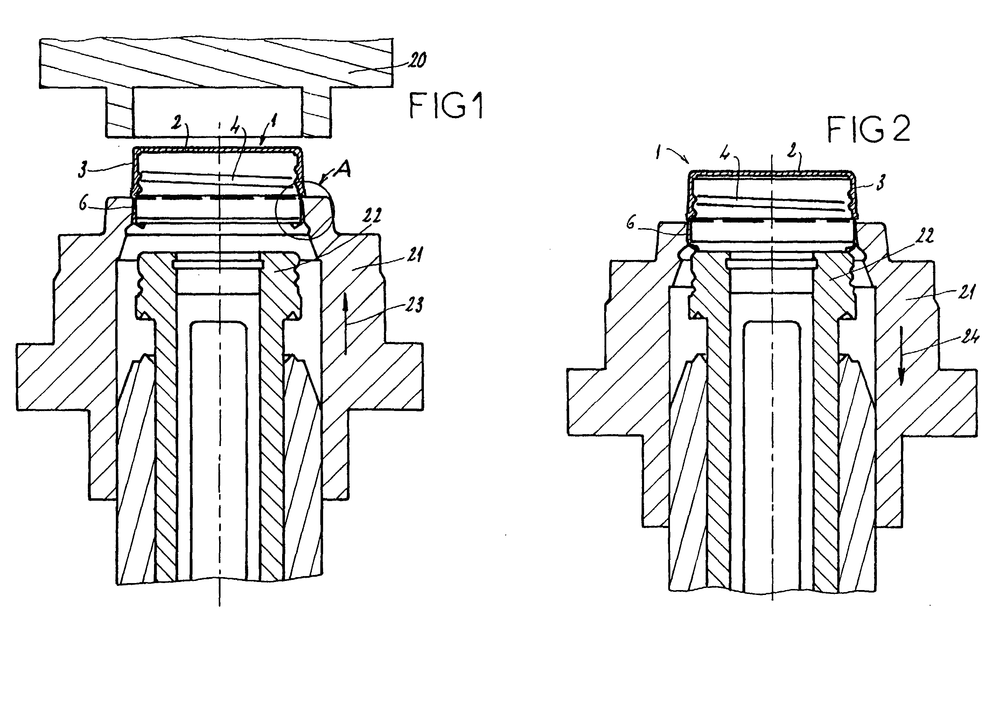

Les figures 1 à 3 et 8 montrent un bouchon 1 qui a été réalisé dans un moule selon l'invention tel que représenté aux figures 1 à 3 et figures 6 et 7.

Ce bouchon 1 comporte, de façon connue en soi, un fond 2 prolongé par une jupe 3 présentant un filetage intérieur, formé de trois filets 4. La jupe 3 est reliée, à son extrémité libre, par une pluralité de pontets 5, régulièrement répartis sur sa périphérie, à une bague d'inviolabilité 6. Ces pontets sont ruptibles sous l'effet d'une certaine contrainte. Ce bouchon 1 est destiné à équiper un récipient dont le col comporte un filetage présentant trois nervures extérieures, ainsi qu'une nervure annulaire disposée en-dessous du filetage extérieur.

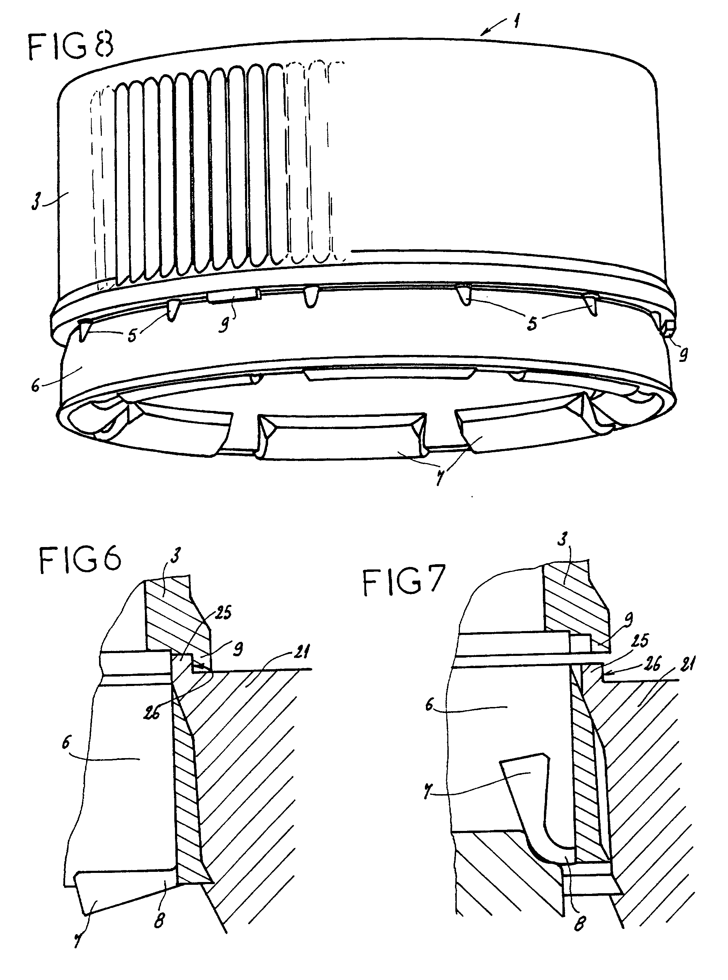

La bague d'inviolabilité 6 présente plusieurs languettes 7 régulièrement réparties. La liaison entre la bague et chaque languette est réalisée par une zone amincie de matière 8 formant une charnière-film, permettant le pliage de la languette vers l'intérieur. Sur les figures 5, 7 et 8, les languettes 10 sont représentées dans leur position finale, telle qu'elles se trouvent sur le col du récipient. Elles sont repliées vers le fond 2 du bouchon et sont sensiblement parallèles à la paroi de la bague d'inviolabilité 6 et à la jupe 3.

Ces languettes 7 sont destinées à coopérer avec la nervure annulaire du col du récipient lors du premier dévissage du bouchon 1. Lors de ce premier dévissage, les languettes viennent buter contre la nervure annulaire avant le dévissage complet, empêchant ainsi la bague d'inviolabilité de passer au-delà de cette nervure. En continuant d'exercer un couple de dévissage sur la jupe 3, les pontets ruptibles 5 cèdent. La bague 6 reste alors en-dessous de la nervure annulaire et la jupe 3 peut être dévissée, permettant l'accès au contenu du récipient.

En outre, le bouchon comporte au niveau du bord libre de la jupe 3, faisant face à la bague d'inviolabilité 6, trois saillies 9 de petite dimension(Figures 6 à 8). Ces saillies 9 s'étendent sur quelques millimètres et ont une hauteur inférieure à 0,6 millimètre. Chacune de ces saillies 9 est située entre deux pontets ruptibles 5 successifs. Comme indiqué ci-dessus, le filetage 4 de la jupe comporte trois filets. Ces derniers ont une première extrémité proche du fond 2 du bouchon et une seconde extrémité proche du bord libre de la jupe 3. Il y a de ce fait trois extémités de filets du côté du bord libre de la jupe. Chacune des saillies se trouve sensiblement à mi-distance de deux de ces extrémités.

Les figures 1 à 3 montrent en coupe un moule pour réaliser un bouchon tel que celui décrit ci-dessus. Ce moule comporte trois parties essentielles : une première partie désignée par fond de moule ou partie mobile 20, une seconde partie appellée partie dévêtisseuse ou bague dévêtrice 21 et une troisième partie constituant le noyau 22 du moule.

La surface intérieure du fond du moule 20 correspond à la surface extérieure de la jupe 3 et du fond 2. La surface interne de la bague dévêtrice correspond à la surface exterieure de la bague d'inviolabilité 6. Enfin, le noyau 22 donne sa forme à la surface intérieure du bouchon, c'est-à-dire du fond 2, de la jupe 3 et de la bague d'inviolabilité 6.

Sur la figure 1, le bouchon 1 a déjà été moulé et le moule est ouvert. Pour ouvrir le moule, on retire tout d'abord la partie mobile 20. Puis la bague dévêtrice 21 est déplacée dans le sens de la flèche 23 de la figure 1. Le noyau 22 reste immobile.

Le noyau 22 est retiré, selon un procédé connu en soi, par un mouvement de translation de la bague dévêtrice 21, sans dévissage. Au cours de cette étape, la jupe 3 se déforme. C'est pour permettre une libre déformation de la jupe 3 que la partie mobile 20 du moule est retirée avant le retrait du noyau. Les languettes 7 de la bague d'inviolabilité 6 sont entraînées par le noyau 22 et se retrouvent en position sensiblement radiale, comme représenté sur les figures 4 et 6.

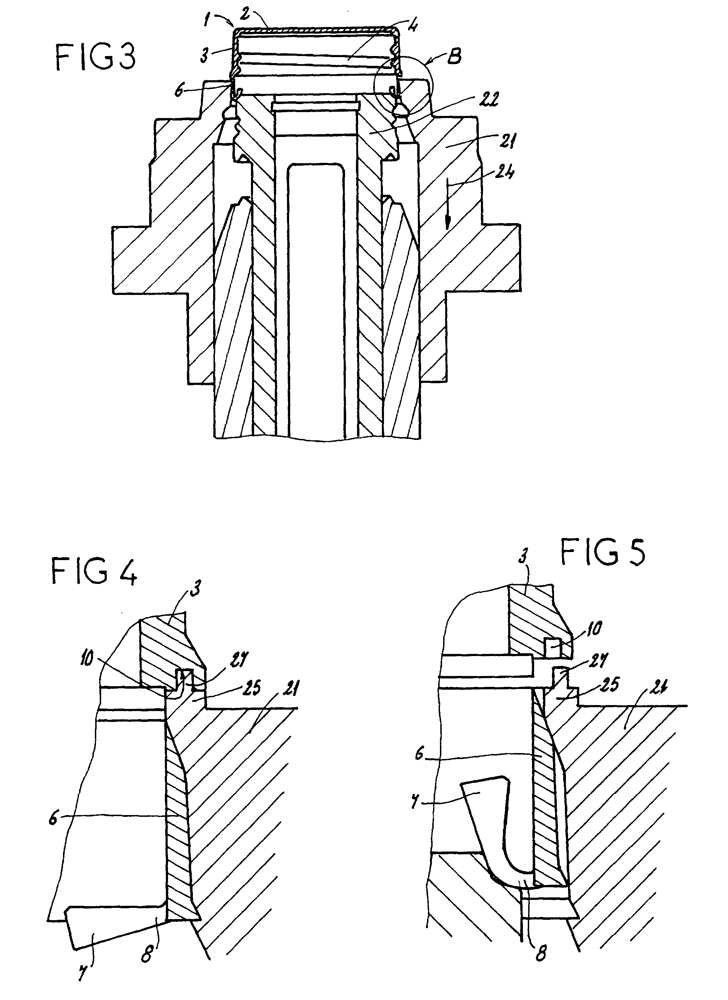

Pour replier les languettes 7 et les mettre dans une position où elles sont sensiblement parallèles à la jupe 3 et à la bague d'inviolabilité 6 (figures 5, 7 et 8), la bague dévêtrice 21 est munie d'un mouvement de translation dans le sens de la flèche 24 des figures 2 et 3, de telle sorte que les languettes 7 se rapprochent du noyau 22. La figure 2 illustre le moment où les languettes 7 viennent au contact du noyau 22 et les figures 3, 5 et 7 montrent le noyau 22 repliant les languettes 7 ainsi que l'éjection du bouchon hors du moule.

Les figures 6 et 7 montrent à échelle agrandie les détails A et B des figures 1 et 3 respectivement. Le plan de coupe de ces figures passe par une saillie 9 du bouchon.

La bague dévêtrice 21 comporte un rebord 25 sur lequel prend appui le bord libre de la jupe 3. Ce rebord 25 présente une encoche 26 dans laquelle loge une saillie 9. La bague dévêtrice 21 comporte trois encoches de ce type. Elles sont réparties à la périphérie du rebord 25. Chacune de ces encoches 26 se trouve entre deux pontets ruptibles 5 voisins. De plus, ces encoches sont à chaque fois situées à sensiblement mi-distance de deux extrémités d'un filet du filetage intérieur de la jupe situées du côté du bord libre de la jupe.

Sur les figures 1 à 3, on constate que le bouchon n'est maintenu que par la bague dévêtrice 21. Lors du repliage des languettes 7, en l'absence des saillies 9 et des encoches 26, le bouchon 1 peut s'incliner et de ce fait, il n'est plus possible de replier les languettes. Grâce aux saillies 9 et aux encoches 26, le bouchon 1 est stable et est parfaitement maintenu.

Une variante d'exécution est représentée sur les figures 4 et 5. Selon cette variante, la liaison tenon mortaise réalisée entre la bague dévêtrice 21 et le bouchon 1 n'est non plus réalisée en plaçant le tenon au niveau du bouchon 1 et la mortaise au niveau de la bague dévêtrice 21, mais en plaçant le tenon au niveau de la bague dévêtrice et la mortaise au niveau du bouchon. Les saillies 9 sont donc remplacées chacune par une encoche 10 et les encoches 26 sont remplacées chacune par une saillie 27.

Bien entendu, l'invention ne se limite pas aux formes d'exécution décrites ci-dessus à titre d'exemples non limitatifs, mais elle en embrasse au contraire toutes les variantes.

Ainsi par exemple, le nombre de saillies ou d'encoches sur le bouchon n'est pas limité à trois. Il pourrait y en avoir deux ou quatre. Un nombre plus important est pensable mais risque de conduire à des problèmes, tels que le coincement du bouchon dans le moule lors de l'éjection hors du moule ou bien lors du retrait du noyau.

Il est également pensable d'avoir sur le bouchon une ou deux encoches et une ou deux saillies.

La forme du bouchon peut être différente. Le fond du bouchon peut par exemple présenter une jupe destinée à venir à l'intérieur du col du récipient pour parfaire l'étanchéité. La forme des languettes peut également être différente de celle représentée au dessin.

## Revendications

1. Moule pour former un bouchon (1) comportant une jupe cylindrique (3) munie d'au moins un filet de vissage (4) et obturée à une extrémité par un fond (2) ainsi qu'une bague d'inviolabilité (6) reliée à l'extrémité libre de la jupe par des pontets ruptibles (5), la bague d'inviolabilité (6) comportant des languettes (7) destinées à coopérer avec une nervure annulaire située sur le col d'un récipient destiné à recevoir le bouchon, présentant :
- une partie mobile ou fond de moule (20) dont la paroi intérieure correspond à la surface extérieure de la jupe et du fond,
- une partie dévêtisseuse ou bague dévêtrice (21) dont la surface interne correspond à la surface extérieure de la bague d'inviolabilité , et
- un noyau (22) destiné à être retiré par un mouvement de translation, sans rotation, et dont la surface extérieure correspond à la suface intérieure du fond, de la jupe et de la bague d'inviolabilité,
caractérisé en ce que la bague dévêtrice (21) présente du côté faisant face au fond du moule (20), au niveau du bord inférieur de la jupe et en au moins deux endroits distincts, au moins une encoche (26) et/ou au moins une saillie (27) afin de créer une liaison tenon/mortaise entre la jupe (3) et la bague dévêtrice (21) lors des moulage et démoulage du bouchon (1).

2. Moule selon la revendication 1, caractérisé en ce que la bague dévêtrice (21) comporte trois encoches (26) réparties à la périphérie d'un rebord (25) sur lequel s'appuie le bord inférieur de la jupe en position fermée du moule.

3. Moule selon la revendication 1, caractérisé en ce que la bague dévêtrice (21) comporte trois saillies (27) réparties à la périphérie d'un rebord (25) sur lequel s'appuie le bord inférieur de la jupe en position fermée du moule.

4. Moule selon l'une des revendications 2 ou 3, dont le noyau (22) comporte trois rainures pour former trois filets sur la face interne de la jupe, caractérisé en ce que chaque encoche (26) ou saillie (27) est placée entre les extrémités, situées du côté de la bague dévêtrice (21), de deux rainures voisines du noyau.

5. Moule selon l'une des revendications 1 à 4, caractérisé en ce que chaque encoche (26) ou saillie (27) est placée entre deux entailles voisines du moule prévues pour réaliser les pontets ruptibles (5) reliant la bague d'inviolabilité à la jupe.

6. Bouchon (1) comportant une jupe cylindrique (3) munie d'au moins un filet de vissage (4) et obturée à une extrémité par un fond (2) ainsi qu'une bague d'inviolabilité (6) reliée à l'extrémité libre de la jupe par des pontets ruptibles (5), la bague d'inviolabilité (6) comportant des languettes (7) qui, retournées vers l'intérieur et vers le fond du bouchon, sont destinées à coopérer avec une nervure annulaire située sur le col d'un récipient destiné à recevoir le bouchon, **caractérisé en ce qu'**il présente, au niveau du bord inférieur de la jupe et en au moins deux endroits distincts, au moins une saillie (9) et/ou au moins une encoche (10), de manière à pouvoir créer une liaison tenon/mortaise avec une pièce de forme complémentaire, telle une bague dévêtrice de moule.

7. Bouchon selon la revendication 6, caractérisé en ce que les saillies (9), et/ou encoches (10) sont disposées sur des zones correspondant au plus à 30% de la circonférence du bouchon et de préférence à environ 10% de la circonférence du bouchon.

8. Bouchon selon l'une quelconque des revendications 6 et 7, caractérisé en ce que la hauteur des saillies (9) ou encoches (10) est inférieure ou égale à 0,6 mm, et de préférence de l'ordre de 0,5 mm.

9. Bouchon selon l'une quelconque des revendications 6 à 8, caractérisé en ce que le bord inférieur de la jupe comporte trois saillies (9) réparties à sa périphérie.

10. Bouchon selon l'une quelconque des revendications 6 à 8, caractérisé en ce que le bord inférieur de la jupe comporte trois encoches (10) réparties à sa périphérie.

11. Bouchon selon l'une des revendications 6 à 9, dont la jupe (3) comporte sur sa face intérieure trois filets, caractérisé en ce que chaque saillie (9) ou encoche (10) est placée entre les extrémités, situées du côté du bord libre de la jupe, de deux filets.

12. Bouchon selon l'une des revendications 6 à 11, caractérisé en ce que chaque saillie (9) ou encoche (10) est placée entre deux pontets ruptibles (5) voisins.

## Patentansprüche

1. Form zur Herstellung einer Verschlußkappe (1) mit einer zylindrischen Schürze (3), die mit mindestens einem Schraubgewinde (4) versehen und an einem Ende durch einen Boden (2) verschlossen ist, sowie einem Ring (6) mit Originalitätssicherung, der durch zerreißbare Brückenteile (5) mit dem freien Ende der Schürze verbunden ist, wobei der Ring (6) mit Originalitätssicherung Laschen (7) aufweist, die mit einer ringförmigen Rippe zusammenwirken sollen, die sich am Hals eines zur Aufnahme der Verschlußkappe bestimmten Behälters befindet; mit folgendem:
- einem beweglichen Teil oder Formboden (20), dessen Innenwand der Außenfläche der Schürze und des Bodens entspricht,
- einem Abstreifteil oder Abstreifring (21), dessen Innenfläche der Außenfläche des Rings mit Originalitätssicherung entspricht, und
- einem Kern (22), der durch eine Translationsbewegung ohne Drehung zurückgezogen werden soll und dessen Außenfläche der Innenfläche des Bodens, der Schürze und des Rings mit Originalitätssicherung entspricht,
dadurch gekennzeichnet, daß der Abstreifring (21) auf der dem Formboden (20) gegenüberliegenden Seite am inneren Rand der Schürze und an mindestens zwei verschiedenen Stellen mindestens eine Kerbe (26) und/oder mindestens einen Vorsprung (27) aufweist, um zwischen der Schürze (3) und dem Abstreifring (21) beim Formen und Entformen der Verschlußkappe (1) eine Zapfen-Schlitz-Verbindung herzustellen.

2. Form nach Anspruch 1, dadurch gekennzeichnet, daß der Abstreifring (21) drei über den Umfang eines vorstehenden Rands (25), an dem der untere Rand der Schürze in geschlossener Stellung der Form anliegt, verteilte Kerben (26) enthält.

3. Form nach Anspruch 1, dadurch gekennzeichnet, daß der Abstreifring (21) drei über den Umfang eines vorstehenden Rands (25), an dem der untere Rand der Schürze in geschlossener Stellung der Form anliegt, verteilte Vorsprünge (27) enthält.

4. Form nach Anspruch 2 oder 3, deren Kern (22) drei Nuten zur Herstellung von drei Gewinden an der Innenfläche der Schürze aufweist, dadurch gekennzeichnet, daß jede Kerbe (26) oder jeder Vorsprung (27) zwischen den sich auf der Seite des Abstreifrings (21) befindenden Enden zweier benachbarter Nuten des Kerns angeordnet ist.

5. Form nach einem der Ansprüche 1 bis 4, dadurch gekennzeichnet, daß jede Kerbe (26) oder jeder Vorsprung (27) zwischen zwei benachbarten Einschnitten der Form angeordnet ist, die zur Herstellung der zerreißbaren Brückenteile (5) , die den Ring mit Originalitätssicherung mit der Schürze verbinden, vorgesehen sind.

6. Verschlußkappe (1) mit einer zylindrischen Schürze (3), die mit mindestens einem Schraubgewinde (4) versehen und an einem Ende durch einen Boden (2) verschlossen ist, sowie einem Ring (6) mit Originalitätssicherung, der durch zerreißbare Brückenteile (5) mit dem freien Ende der Schürze verbunden ist, wobei der Ring (6) mit Originalitätssicherung Laschen (7) aufweist, die nach innen und zum Boden der Verschlußkappe umgestülpt sind und mit einer ringförmigen Rippe zusammenwirken sollen, die sich am Hals eines zur Aufnahme der Verschlußkappe bestimmten Behälters befindet, dadurch gekennzeichnet, daß sie am unteren Rand der Schürze und an mindestens zwei verschiedenen Stellen mindestens einen Vorsprung (9) und/oder mindestens eine Kerbe (10) aufweist, um eine Zapfen-Schlitz-Verbindung mit einem Teil komplementärer Form, wie zum Beispiel einem Abstreifring der Form, herstellen zu können.

7. Verschlußkappe nach Anspruch 6, dadurch gekennzeichnet, daß die Vorsprünge (9) und/oder Kerben (10) in Bereichen angeordnet sind, die höchstens 30% des Verschlußkappenumfangs und vorzugsweise ca. 10% des Verschlußkappenumfangs entsprechen.

8. Verschlußkappe nach Anspruch 6 oder 7, dadurch gekennzeichnet, daß die Höhe der Vorsprünge (9) oder Kerben (10) kleiner gleich 0,6 mm ist und vorzugsweise ca. 0,5 mm beträgt.

9. Verschlußkappe nach einem der Ansprüche 6 bis 8, dadurch gekennzeichnet, daß der untere Rand der Schürze drei über seinen Umfang verteilte Vorsprünge (9) aufweist.

10. Verschlußkappe nach einem der Ansprüche 6 bis 8, dadurch gekennzeichnet, daß der untere Rand der Schürze drei über seinen Umfang verteilte Kerben (10) aufweist.

11. Verschlußkappe nach einem der Ansprüche 6 bis 9, deren Schürze (3) über ihre Innenfläche drei Gewinde aufweist, dadurch gekennzeichnet, daß jeder Vorsprung (9) oder jede Kerbe (10) zwischen den sich auf der Seite des freien Rands der Schürze befindenden Enden der beiden Gewinde angeordnet ist.

12. Verschlußkappe nach einem der Ansprüche 6 bis 11, dadurch gekennzeichnet, daß jeder Vorsprung (9) oder jede Kerbe (10) zwischen zwei benachbarten zerreißbaren Brückenteilen (5) angeordnet ist.

## Claims

1. Mould for forming a stopper (1) comprising a cylindrical skirt (3) provided with at least one screw thread (4) and closed at one end by a bottom (2) as well as a tamper-proof ring (6) connected to the free end of the skirt by breakable bridging piece (5), the tamper-proof ring (6) including tabs (7) designed to cooperate with an annular rib situated on the neck of a container designed to receive the stopper, having;
- a movable part or mould bottom (20) of which the inner wall corresponds to the outer surface of the skirt and bottom,
- a stripping part or stripping ring (21) of which the inner 'surface corresponds to the outer surface of the tamper-proof ring, and
- a core (22) designed to be withdrawn by a translational movement, without rotation, and of which the outer surface corresponds to the inner surface of the bottom, the skirt and the tamper-proof ring,
characterized in that the stripping ring (21) has, on the side facing the bottom of the mould (20), in the region of the lower edge of the skirt and in at least two distinct locations, at least one recess (26) and/or at least one projection (27) so as to create a tenon and mortice linkage between the skirt (3) and the stripping ring (21) when the stopper (1) is moulded and removed from the mould.

2. Mould according to claim 1, characterized in that the stripping ring (21) has three recesses (26) distributed at the periphery of a rim (25) on which the lower edge of the skirt rests in the closed position of the mould.

3. Mould according to claim 1, characterized in that the stripping ring (21) has three projections (27) distributed at the periphery of a rim (25) on which the lower edge of the skirt rests in the closed position of the mould.

4. Mould according to either of claims 2 or 3, of which the core (22) has three grooves so as to form three threads on the inner face of the skirt, characterized in that each recess (26) or projection (27) is placed between the ends, situated on the side of the stripping ring (21), of two adjacent grooves of the core.

5. Mould according to one of claims 1 to 4, characterized in that each recess (26) or projection (27) is placed between two adjacent notches of the mould provided so as to produce breakable bridging pieces (5) linking the tamper-proof ring to the skirt.

6. Stopper (1) comprising a cylindrical skirt (3) provided with at least one screw thread (4) and closed at one end by a bottom (2) as well as a tamper-proof ring (6) connected to the free end of the skirt by breakable bridging pieces (5), the tamper-proof ring (6) having tabs (7) which, turned towards the inside and towards the bottom of the stopper, are designed to cooperate with an annular rib situated on the neck of a container designed to receive the stopper, characterized in that it has, in the region of the lower edge of the skirt and in at least two distinct locations, at least one projection (9) and/or at least one recess (10), so that it can create a tenon and mortice linkage with a component with a complementary shape, such as a mould stripping ring.

7. Stopper according to claim 6, characterized in that the projections (9) and/or the recesses (10) are arranged on zones corresponding at most to 30 % of the circumference of the stopper and preferably approximately 10 % of the circumference of the stopper.

8. Stopper according to either of claims 6 or 7, characterized in that the height of the projections (9) or recesses (10) is less than or equal to 0.6 mm, and preferably of the order of 0,5 mm.

9. Stopper according to any one of claims 6 to 8, characterized in that the lower edge of the skirt includes three projections (9) distributed at its periphery.

10. Stopper according to any one of claims 6 to 8, characterized in that the lower edge of the skirt includes three recesses (10) distributed at its periphery.

11. Stopper according to one of claims 6 to 9, of which the skirt (3) includes three threads on its inner face, characterized in that each projection (9) or recess (10) is placed between the ends, situated on the side of the free edge of the skirt, of two threads.

12. Stopper according to one of claims 6 to 11, characterized in that each projection (9) or recess (10) is placed between two adjacent breakable bridging pieces (5).
